**Europäisches Patentamt**

**European Patent Office**

**Office européen des brevets**

(11) Numéro de publication : **0 406 075 B1**

## FASCICULE DE BREVET EUROPEEN

(45) Date de publication du fascicule du brevet :
07.12.94 Bulletin 94/49

(51) Int. Cl.$^5$ : **G21C 7/36,** G21C 17/10, G21D 3/08

(21) Numéro de dépôt : **90401778.7**

(22) Date de dépôt : **22.06.90**

(54) Procédé de détermination de la répartition de la puissance dans le coeur d'un réacteur nucléaire et procédé de calibrage des détecteurs neutroniques autour du coeur d'un réacteur nucléaire.

(30) Priorité : **29.06.89 FR 8908710**

(43) Date de publication de la demande :
**02.01.91 Bulletin 91/01**

(45) Mention de la délivrance du brevet :
**07.12.94 Bulletin 94/49**

(84) Etats contractants désignés :
**BE CH DE ES GB LI SE**

(56) Documents cités :
EP-A- 0 127 532
EP-A- 0 238 299
EP-A- 0 241 301
FR-A- 2 343 313

(73) Titulaire : **FRAMATOME**
**Tour Fiat**
**1, Place de la Coupole**
**F-92400 Courbevoie (FR)**

(72) Inventeur : **Anière, Patrick**
**3 Clos Saint Lubin,**
**Frouville**
**F-95690 Nesles-La-Vallée (FR)**

(74) Mandataire : **Bourely, Paul et al**
**SOSPI**
**14-16, rue de la Baume**
**F-75008 Paris (FR)**

## Description

La présente invention concerne les réacteurs nucléaires. Elle s'applique notamment aux réacteurs du type à eau légère pressurisée. Typiquement un tel réacteur constitue la chaudière d'une centrale nucléaire destinée à alimenter un réseau de distribution électrique et il comporte un coeur d'axe vertical baignant dans une cuve qui est l'un des constituants d'un circuit caloporteur dit "primaire". Dans ce coeur des éléments combustibles linéaires contiennent le combustible nucléaire entouré de gaines.

Pendant l'exploitation du réacteur nucléaire, la sécurité vis à vis du public repose en partie sur l'intégrité de "trois barrières" qui sont interposées entre le combustible nucléaire et l'extérieur et qui sont constituées par les gaines des éléments de combustibles, le circuit primaire, et un bâtiment contenant le réacteur. Il est donc important de maintenir l'intégrité de ces gaines. Il faut pour cela respecter certaines limites concernant la puissance linéique locale dégagée dans le ccmbustible, ce qui n'est rendu possible que par la connaissance de paramètres representatifs de la répartition de puissance dans le coeur du réacteur. De tels paramètres peuvent être un niveau de puissance nucléaire global P et une différence axiale de puissance nucléaire DP, ce dernier paramètre constituant une représentation grossière de la distribution spatiale de puissance.

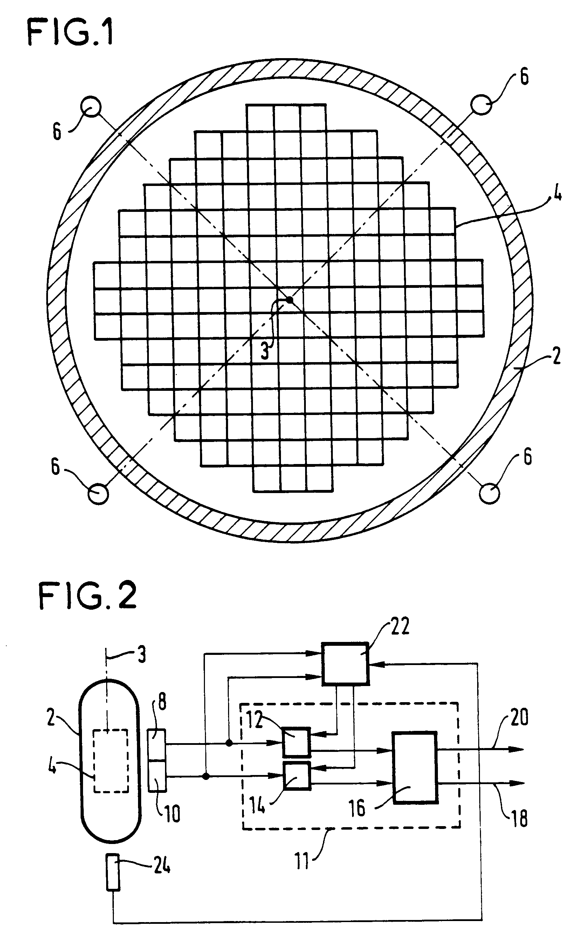

On utilise pour cela une instrumentation nucléaire constituée par des détecteurs neutroniques. Dans la plupart des réacteurs de puissance à eau sous pression, ces détecteurs sont placés à l'extérieur de la cuve et contre celle-ci, le plus souvent aux quatre emplacements définis par les diagonales du coeur du réacteur. (figure 1). Ils sont appelés ci-après "détecteurs externes".

Ces détecteurs délivrent en continu des signaux proportionnels aux flux de neutrons sortant de la cuve. Dans la mesure où il existe une relation entre ces flux de neutrons et ceux qui règnent à l'intérieur du coeur, on a la possibilité d'exprimer des puissances localisées à l'intérieur du coeur à partir des signaux issus des détecteurs. En particulier si les détecteurs peuvent être fonctionnellement assimilés à un détecteur haut et un détecteur bas, on peut reconstruire les paramètres P et DP, à l'aide des relations

$$P = P_H + P_B$$
$$DP = P_H - P_B$$

dans lesquelles $P_H$ et $P_B$ sont les puissances moyennes générées dans la moitié haute et dans la moitié basse du coeur, et sont exprimables à partir des courants délivrés par les détecteurs haut et bas, respectivement.

Les relations les plus usuellement utilisées pour exprimer le niveau de puissance nucléaire P et la différence axiale de puissance nucléaire DP sont simples, du type :

$$P = K_H I_H + K_B I_B$$
$$DP = K_D (K_H I_H - K_B I_B)$$

Dans ces relations $I_H$ et $I_B$ représentent respectivement les signaux de détection fournis par les détecteurs haut et bas, et $K_H$, $K_B$, et $K_D$ représentent des coefficients de calibrage de l'instrumentation nucléaire. Les coefficients tels que $K_H$, $K_B$, $K_D K_H$ et $-K_D K_B$ qui sont directement appliqués aux signaux de détection sont immédiatement formés par combinaisons de ces signaux de calibrage et sont appelés ci-après coéfficients de pondération.

Les paramètres P et DP intervenant dans les systèmes de surveillance et de protection, il est requis que leur détermination soit effectuée dans le respect des critères de précision appliqués dans ces systèmes. C'est pourquoi les coefficients de calibrage sont vérifiés périodiquement et réactualisés au moins une fois chaque trimestre au cours d'une opération de calibrage qui comporte d'abord une opération de relevé simultané de données. Dans cette dernière on mesure, à l'aide de systèmes de référence, les paramètres P et DP, et on recueille simultanément les signaux délivrés par les détecteurs externes. Les résultats ainsi relevés sont ensuite traités pour déterminer ces coefficients de calibrage réactualisés. Lorsqu'on utilise les procédés de calibrage connus, le nombre de coefficients de calibrage à déterminer impose d'effectuer successivement plusieurs telles opérations de relevé dans des configurations différentes de fonctionnement du réacteur définies par des distributions spatiales de puissance nucléaire indépendantes.

Pratiquement, ces procédés de calibrage connus obligent à provoquer une oscillation xenon pendant laquelle les relevés nécessaires sont effectués, et qui doit être suivie d'une phase de stabilisation avant que l'on puisse reprendre une exploitation normale du réacteur. L'opération de calibrage fait donc apparaitre une période de l'ordre de trois jours pendant laquelle le réacteur nucléaire n'est plus disponible pour répondre aux besoins du réseau. Un tel procédé de calibrage connu est partiellement décrit dans le brevet français FR-A-2 343 313 (Westinghouse) revendiquant la priorité de la demande américaine n° 664 114 du 5 mars 1976 (Graham et autre).

La présente invention a notamment pour buts de simplifier les opérations de calibrage des détecteurs externes d'un tel réacteur en diminuant le nombre des coefficients de calibrage à réactualiser lors de ces opérations, d'éviter des perturbations du fonctionnement du réacteur, et ou d'améliorer sa disponibilité par exemple pour la production d'énergie électrique, tout cela sans diminuer la précision de la connaissance de la répartition des puissances nucléaires dans le coeur du réacteur en fonctionnement telle qu'évaluée par les procédés précédemment connus.

Elle a notamment pour objet un procédé de calibrage de détecteurs neutroniques et un procédé de détermination de la répartition de la puissance nucléaire à l'intérieur du coeur d'un réacteur nucléaire tels que définis par les revendications 1 et 2 ci-après :

On comprendra que les successions de détecteurs, de paramètres ou de signaux mentionnées ci-dessus peuvent ne concerner nullement les positions de ces détecteurs ou les significations physiques de ces paramètres ou signaux. Elles n'ont été mentionnées que pour permettre d'identifier chacun de ces détecteurs, paramètres ou signaux en lui attribuant un rang. Par ailleurs les dites opérations de détermination indirectes peuvent être répétées non seulement avec des intervalles de répétition relativement courts, mais encore être effectuées de manière continue, et lesdites opérations de traitement ou de calcul peuvent être effectuées avantageusement mais non nécessairement de manière automatique.

Quant aux opérations de mesure de référence, elles sont typiquement effectuées à l'aide de systèmes de mesure de référence. Certains de ces systèmes pénètrent provisoirement dans ledit coeur pour y mesurer directement lesdits flux neutroniques internes dans leur répartition spatiale, mais doivent en être ensuite retirés pour éviter d'y être détériorés par les intenses rayonnements ambiants. D'autres systèmes de mesure de référence mesurent le niveau global de puissance, par exemple en utilisant un bilan enthalpique.

La présente invention évite notamment ainsi d'avoir à modifier la configuration de fonctionnement du coeur dans le seul but de réactualiser les coefficients de calibrage. Plus précisément, dans un procédé de calibrage selon la présente invention, on effectue un relevé simultané de données dans une seule configuration de fonctionnement du coeur et on modifie ensuite dans une même proportion tous les coefficients de pondération relatifs à un même détecteur.

Les principes qui sont à la base de cette invention peuvent être plus facilement compris à partir des considérations suivantes qui sont relatives au cas simple précédemment considéré : L'élaboration des paramètres P et DP selon les procédés connus ci-avant décrit bien la relation globale qui existe entre les signaux délivrés par l'instrumentation nucléaire, et les paramètres de répartition de puissance dans le coeur. Mais elle ne prend nullement en compte pour cela la diversité des intéractions qui créent cette relation.

Sachant qu'une partie seulement des éléments combustibles situés en périphérie du coeur participe à la réponse de l'instrumentation nucléaire externe, un principe de l'invention consiste à représenter le plus explicitement possible par des coefficients découplés les diverses interactions qui créent cette relation, à savoir l'intéraction entre la puissance axiale moyenne et la puissance axiale périphérique, le transfert du flux de neutrons périphériques vers les divers détecteurs et la sensibilité propre de chaque détecteur. Une fois cette représentation établie, l'invention consiste à imposer à un certain nombre de ces coefficients de rester constants de façon que le nombre de coefficients de calibrage restant à déterminer ne nécessite plus pour cela de générer plusieurs répartitions spatiales indépendantes de la puissance nucléaire, c'est-à-dire plusieurs configurations de fonctionnement du coeur.

Selon la présente invention peut écrire la relation suivante entre deux vecteurs représentant l'un , P, la distribution axiale de la puissance moyenne du coeur, l'autre I, les signaux délivrés par les détecteurs externes, chaque composante de ces vecteurs étant liée soit à une tranche axiale de coeur, soit à un détecteur :

$$P = A'. T'. S'. I$$

Dans cette relation A',T', et S' sont des opérateurs linéaires représentés par des matrices carrées d'ordre égal au nombre de composants des vecteurs P et I.

Ces opérateurs symbolisent respectivement :
- A' : la relation existant entre la puissance nucléaire axiale de la zone périphérique contribuant à l'élaboration de la réponse des détecteurs, et la puissance nucléaire axiale moyenne,
- T' : la possibilité de transfert d'un flux moyen de neutrons générés en périphérie d'une tranche axiale de rang i de coeur vers un détecteur de rang j,
- S' : la sensibilité des détecteurs , c'est à dire la relation entre les signaux de détection et les flux de neutrons incident sur les détecteurs . La matrice S' est diagonale.

Des études sur ce sujet ainsi qu'un grand nombre d'analyses de relevés expérimentaux ont permis de montrer que la matrice de transfert T pouvait être, pour une géométrie coeur-détecteurs figée, considérée comme constante dès lors que la modélisation utilisée pour construire analytiquement cette matrice refletait assez bien les phénomènes physiques de transport neutronique mis en jeu.

Des simplifications de ce système matriciel ont également pu être apportées et corroborées par une importance validation expérimentale. Elles conduisent finalement à la relation suivante :

$$P = T.S.I$$

Dans cette nouvelle relation, l'information précedemment contenue dans l'opérateur A' se trouve partagée et intégrée pour partie dans la matrice T qui remplace la matrice T' et pour partie dans la matrice de sensibilité S qui remplace la matrice S'. Il a été montré et ce jusqu'à des matrices d'ordre 6, que la matrice S, même astreinte à rester diagonale, permettait à elle-seule de compenser la perte de représentativité du système matriciel ainsi posé et cela jusqu'au point de pouvoir toujours considérer la matrice de transfert T comme constante.

Cette dernière découverte constitue la base pratique de l'invention .

A l'aide des figures schématiques ci-jointes, on va décrire plus particulièrement ci-après, à titre d'exemple non limitatif, commment la présente invention peut être mise en oeuvre dans le cadre de l'exposé qui en a été donné ci-dessus. Lorsqu'un même élément est représenté sur plusieurs figures il y est désigné par le même signe de référence.

La figure 1 représente une vue en coupe horizontale du coeur d'un réacteur nucléaire avec des détecteurs neutroniques externes.

La Figure 2 représente une vue de coté du même réacteur avec les mêmes détecteurs et un système de mesure de référence, et avec un schéma par blocs d'organes de traitement de l'information qui permettent de mettre la présente invention en oeuvre.

Conformément à la figure 1 le coeur 4 d'un réacteur d'axe vertical 3 est entouré par une cuve 2 autour de laquelle sont disposées quatre colonnes de détection neutronique, telles que 6 comportant chacune une section haute et une section basse. Chacune de ces sections constitue un détecteur externe haut tel que 8 ou bas tel que 10 (voir figure 2).

Chacun des signaux fournis par ces quatre détecteurs hauts, (ou bas) constitue un signal de détection haut IH, ( ou bas IB) dépendant surtout des flux neutroniques s'échappant de la partie haute( ou basse) du coeur.

Ces signaux de détection haut et bas sont reçus au sein d'un système de détermination de répartition 11, par deux multiplicateurs 12 et 14 qui les multiplient par deux termes de sensibilité SH et SB, respectivement.

Le vecteur constitué par ces deux signaux ainsi multipliés est traité dans un organe de traitement matriciel 16 qui le multiplie par une matrice de transfert T pour fournir un vecteur de répartition axiale de puissance dont les deux composantes P et DP sont fournies sur deux conducteurs 18 et 20 respectivement.

Lors d'une opération de calibrage un système de calibrage 22 reçoit simultanément les signaux fournis par les détecteurs externes 8 et 10, et ceux fournis par un système de mesure de référence 24 qui est introduit provisoirement dans le coeur 4 pour mesurer directement des flux neutroniques internes. Le système de calibrage 22 traite ces deux successions de signaux et fournit en réponse deux signaux de commande aux multiplicateurs 12 et 14 . Ces signaux definissent les termes de sensibilité SH et SB jusqu'à l'opération de calibrage suivante.

On voit que, dans son mode de mise en oeuvre très simple décrit, la présente invention est appliquée dans le cas où les matrices de sensibilité et de transfert précédemment mentionnées sont carrées et d'ordre 2. Le calcul effectué dans le système de détermination 11 est représenté par les équations suivantes.

$$P = (G_H S_H + F_H S_H)I_H + (G_B S_B + F_B S_B)I_B$$
$$DP = (G_H S_H - F_H S_H)I_H + (G_B S_B - F_B S_B)I_B$$

On voit que la matrice de sensibilité S est formée par les termes de sensibilité selon l'égalité

$$S = \begin{vmatrix} S_H & 0 \\ 0 & S_B \end{vmatrix}$$

et une matrice de transfert par les termes de transfert selon l'égalité

$$T = \begin{vmatrix} G_H & G_B \\ F_H & F_B \end{vmatrix}$$

et que les coefficients de pondération $G_H S_H + F_H S_H, G_B S_B + F_B S_B, G_H S_H - F_H S_H$ et $G_B S_B - F_B S_B$ prennent selon l'invention la place des coefficients de pondération précédemment mentionnés comme utilisés dans les procédés connus, $K_H, K_B, K_D K_H$ et $-K_D K_B$ respectivement.

Selon la présente invention les deux termes de sensibilité $S_H$ et $S_B$ sont établis par le système 22 à partir d'une seule succession de signaux de référence d'une seule succession de deux signaux de détection, sans changement de la configuration de fonctionnement du coeur.

## Revendications

1. Procédé de calibrage de détecteurs neutroniques, ces détecteurs étant en nombre n et disposés à l'extérieur du coeur d'un réacteur nucléaire pour fournir des signaux de détection représentatifs de flux neutroniques externes s'échappant de ce coeur, des opérations de détermination indirecte étant effectuées à l'aide de ces signaux et étant répétées à des intervalles de temps déterminés en vue de déterminer un ensemble de p paramètres de répartition globalement représentatifs de la répartition de la puissance nucléaire à l'intérieur de ce coeur (4),

   - ces opérations de détermination faisant application d'une matrice de n.p coefficients de calibrage associés chacun d'une part à un détecteur et à ses signaux de détection d'autre part à un paramètre de répartition, chaque paramètre de répartition étant déterminé en faisant une somme des signaux de détection pondérés par les coefficients de calibrage associés d'une part respectivement à ces signaux d'autre part à ce paramètre,

- ce procédé comportant des opérations de calibrage répétées à des intervalles de temps déterminés supérieurs à ceux des opérations de détermination indirecte et comportant chacune:

- d'abord des mesures de flux neutroniques à l'intérieur du coeur pour réaliser une détermination directe des paramètres de répartition,

- ensuite un calcul pour réactualiser les coefficients de calibrage,

- ce procédé étant caractérisé par le fait que, pour chaque opération de calibrage, chacun des coefficients de calibrage associés à un détecteur est calculé comme étant le produit d'un terme de sensibilité dépendant seulement de ce détecteur et réactualisé à chaque opération de calibrage, par un terme de transfert restant inchangé sur une suite de plusieurs opérations de calibrage, de sorte que le nombre des termes à réactualiser lors de chaque opération de cette suite est limité au nombre n des détecteurs et que les mesures de flux neutronique à l'intérieur du coeur nécessaires à cette opération peuvent être faites sans changer la configuration de fonctionnement du coeur.

2. Procédé de détermination de la répartition de la puissance nucléaire à l'intérieur du coeur dudit réacteur nucléaire, ce procédé mettant en oeuvre le procédé de calibrage selon la revendication 1, des flux neutroniques internes étant présents à l'intérieur de ce coeur et y libèrant des puissances nucléaires locales dépendant d'une configuration variable de fonctionnement de celui-ci et constituant ensemble ladite répartition de la puissance nucléaire, ce procédé de détermination comportant les opérations suivantes:

- mise en place desdits détecteurs neutroniques (8, 10) à l'extérieur dudit coeur du réacteur (4), ces détecteurs formant une succession dans laquelle ils présentent des rangs tels que définis dans la description p.6, l.6, ces détecteurs étant placés dans des positions fixes pour recevoir lesdits flux neutroniques externes, et pour fournir en réponse une succession dedits signaux de détection correspondants présentant les mêmes rangs, ces signaux étant représentatifs des flux neutroniques reçus par ces détecteurs tout en dépendant aussi de la sensibilité de ces détecteurs,

- lesdites opérations de détermination indirecte de répartition, chacune de ces opérations comportant une opération de relevé pour recueillir une dite succession de signaux de détection et une opération de traitement pour former une succession de signaux de répartition présentant des rangs et respectivement représentatifs d'une succession desdits paramètres de répartition, cette succession de paramètres définissant la répartition de la puissance nucléaire dans ledit coeur dans la configuration présentée par celui-ci lors de cette opération de relevé, cette opération de traitement formant chacun des signaux de répartition à partir de la succession de signaux de détection et avec l'aide de coefficients prédéterminés de pondération, et comportant pour cela les opérations suivantes:

- multiplication de chacun des signaux de détection de ladite succession par un dit coefficient prédéterminé, ce coefficient dépendant du rang de ce signal de détection et de celui du signal de répartition que l'on forme, cette multiplication fournissant un signal de détection pondéré,

- et sommation de tous lesdits signaux de détection pondérés,

- chaque dite opération de calibrage comportant:

- d'abord un ensemble d'opérations de relevé simultané de données, chacune des opérations de cet ensemble comportant une opération de mesure de référence incluant lesdites mesures de flux neutronique à l'intérieur du coeur pour fournir une succession de signaux de référence dont les signaux sont respectivement représentatifs desdits paramètres de ladite succession de paramètres de répartition dans la configuration que ledit coeur présente lors de cette opération de relevé simultané de données, et une opération de relevé de vérification pour recueillir dans la même dite configuration une dite succession dedits signaux de détection, une correspondance étant établie entre cette succession de paramètres de répartition et cette succession de signaux de détection,

- et ensuite un calcul de calibrage, effectué à partir des successions de signaux de référence et des successions de signaux de détection, pour calculer de nouveaux coefficients tels qu'une opération fictive de traitement qui serait effectuée comme ladite opération de traitement avec chacune de ces successions de signaux de détection et ces nouveaux coefficients à la place desdits coefficients prédéterminés forme une dite succession de signaux de répartition dont les signaux sont respectivement égaux à ceux de ladite succession corespondante de signaux de référence,

- lesdits nouveaux coefficients constituant lesdits coefficients prédéterminés lors de celles des opérations de détermination indirecte qui suivent cette opération de calibrage,

- chaque terme de sensibilité utilisé au cours dudit calcul de calibrage dépendant du rang dudit signal de détection qui doit être multiplié par ledit nouveau coefficient en cours de calcul, mais étant indépendant du rang des signaux de répartition que l'on formera avec l'aide de ce nouveau coefficient, ledit terme de transfert dépendant à la fois du rang dudit signal de détection qui doit être multiplié par ledit nouveau coefficient en cours de calcul et de celui desdits signaux de répartition que l'on formera avec l'aide de ce coefficient, ce terme de transfert recevant une valeur conservée en mémoire et inchangée au cours de plusieurs opérations de calibrage successives qui sont ainsi simplifiées, de sorte que lesdits ensembles d'opérations de relevé simultané de données compris dans lesdites opérations de calibrage simplifiées comportent chacun une seule telle opération de relevé pour fournir une seule dite succession de signaux de référence et une seule dite succession de signaux de détection correspondants.

3. Procédé selon la revendication 2, caractérisé par le fait que ladite opération de mesure de référence est effectuée à l'aide d'un système de mesure de référence (24) pénétrant provisoirement à l'intérieur du coeur (4) pour y mesurer directement lesdits flux neutroniques internes.

4. Procédé selon la revendication 2, caractérisé par le fait que lesdits détecteurs neutroniques disposés à l'extérieur du coeur constituent une pluralité de colonnes de détection neutroniques (6) réparties angulairement autour d'un axe vertical (3) du coeur et comportant chacune au moins un détecteur haut (8) et un détecteur bas (10) pour déterminer une répartition axiale constituant ladite répartition spatiale des puissances locales.

5. Procédé selon la revendication 4, caractérisé par le fait que lesdits détecteurs neutroniques sont un détecteur haut (8) et un détecteur bas (10) pour déterminer la répartition des puissances nucléaires locales entre un niveau haut et un niveau bas du coeur (4).

6. Procédé selon la revendication 2 caractérisé par le fait que lesdits termes de transfert restent inchangés pendant la durée de service du coeur (4).

## Patentansprüche

1. Verfahren zum Kalibrieren von Neutronendetektoren, wobei diese Detektoren von der Anzahl n sind und außen am Kern eines Kernreaktors angeordnet sind, um Erfassungssignale, die äußeren diesem Kern entweichenden Neutronenflüssen entsprechen, zu liefern, wobei Vorgänge zur indirekten Bestimmung mit Hilfe dieser Signale durchgeführt werden und in vorbestimmten Zeitintervallen wiederholt werden, um eine Gesamtheit von p Verteilparametern zu bestimmen, die global der Verteilung der Nuklearenergie im Inneren des Kerns (4) entsprechen,

- wobei diese Bestimmungsvorgänge eine Matrix von n.p Kalibrierungs-Koeffizienten verwenden, von denen jeder einerseits einem Detektor und seinen Erfassungssignalen und andererseits einem Verteilparameter zugeordnet ist, wobei jeder Verteilparamter unter Bildung einer Summe der Erfassungssignale bestimmt wird, die durch die Kalibrierungs-Koeffizienten gewichtet sind, die einerseits diesen Signalen bzw. andererseits diesem Parameter zugeordnet sind,

- wobei das Verfahren Kalibrierungs-Vorgänge aufweist, die in vorbestimmten Zeitintervallen wiederholt werden, die größer sind als jene der indirekten Bestimmungsvorgänge, und jeweils aufweisen:

- zunächst Neutronenflußmessungen im Inneren des Kerns, um eine direkte Bestimmung der Verteilparameter durchzuführen,

- danach eine Berechnung zur Reaktualisierung der Kalibrierungs-Koeffizienten,

- wobei das Verfahren dadurch gekennzeichnet ist, daß für einen jeden Kalibrierungsvorgang, ein jeder der Kalibrierungs-Koeffizienten, die einem Detektor zugeordnet sind, als das Produkt eines Empfindlichkeitsterms berechnet wird, der nur von diesem Detektor abhängt, und bei jedem Kalibrierungsvorgang durch einen Übertragungsterm reaktualisiert wird, der über eine Folge von mehreren Kalibrierungsvorgängen unverändert bleibt, derart, daß die Anzahl der zu reaktualisierenden Terme bei jedem Vorgang dieser Folge auf die Zahl n der Detektoren begrenzt wird, und daß die notwendigen Messungen des Neutronenflusses im Inneren des Kerns für diesen Vorgang durchgeführt werden können, ohne die Konfiguration des Betriebs des Kerns zu ändern.

2. Verfahren zur Bestimmung der Verteilung der Kernenergie im Inneren des Kerns des Kernreaktors, wobei dieses Verfahren das Verfahren zur Kalibrierung nach Anspruch 1 umsetzt, wobei interne Neutronenströme im Inneren des Kerns vorliegen und dort lokale Kernenergien freisetzen, abhängig von einer veränderlichen Betriebskonfiguration von diesem und die zusammen die Kernenergieverteilung bilden, wobei das Bestimmungsverfahren die folgenden Schritte aufweist:

- Anbringen der Neutronendetektoren (8, 10) außen am Reaktorkern (4), wobei diese Detektoren eine Folge bilden, in der sie Ränge bilden, wie das in der Beschreibung Seite 6, Zeile 6 definiert ist, wobei diese Detektoren in festen Positionen plaziert sind, um die externen Neutronenströme aufzunehmen, und um in Antwort darauf eine Aufeinanderfolge der entsprechenden Erfassungssignale zu liefern, die dieselben Ränge aufweisen, wobei diese Signale den Neutronenflüssen entsprechen, die durch diese Detektoren aufgenommen werden, in Abhängigkeit auch der Empfindlichkeit dieser Detektoren,

- wobei die indirekten Bestimmungsvorgänge der Verteilung jeweils einen Aufstellungsvorgang aufweisen, um eine besagte Aufeinanderfolge von Erfassungssignalen zu sammeln, und einen Verarbeitungsvorgang aufweisen, um eine Aufeinanderfolge von Verteilungssignalen zu bilden, die Ränge aufweisen und jeweils einer Aufeinanderfolge von Verteilparametern entsprechen, wobei diese Aufeinanderfolge der Parameter die Verteilung der Kernenergie in dem Kern in der vorliegenden Konfiguration durch jenen bei dem Aufhebevorgang definiert wird, wobei dieser Verarbeitungsvorgang ein jedes einzelne der Verarbeitungssignale ausgehend von der Aufeinanderfolge der Erfassungssignale und mit Hilfe von vorbestimmten Gewichtungs-Koeffizienten bildet, und hierfür die folgenden Schritte aufweist:

- Multiplikation eines jeden der Erfassungssignale der Aufeinanderfolge durch einen genannten vorbestimmten Koeffizienten, wobei der Koeffizient vom Rang des Erfassungssignals und von jenem des Verteilungssignals, das man bildet, abhängt, wobei diese Multiplikation ein gewichtetes Erfassungssignal liefert,

- und Summierung aller gewichteten Erfassungssignale,

- wobei jeder Kalibrierungsvorgang aufweist:
- zunächst eine Gesamtheit von gleichzeitigen Aufhebungsvorgängen der Daten, wobei ein jeder der Vorgänge dieser Gesamtheit einen Referenzmeßvorgang aufweist, der die Neutronenflußmessungen im Inneren des Kerns umfaßt, um eine Aufeinanderfolge von Referenzsignalen zu liefern, deren Signale jeweils repräsentativ sind für die Parameter der Aufeinanderfolge der Verteilungsparameter in der Konfiguration, die der Kern bei diesem gleichzeitigen Aufhebungsvorgang der Daten aufweist, und einen Aufhebungsvorgang der Verifizierung, um in derselben Konfiguration eine vorgenannte Aufeinanderfolge von Erfassungssignalen zu sammeln, wobei ein Zusammenhang zwischen dieser Aufeinanderfolge von Verteilparametern und dieser Aufeinanderfolge von Erfassungssignalen geschaffen wird,

- und anschließend eine Kalibrierungsberechnung, die ausgehend von den Aufeinanderfolgen von Referenzsignalen und Aufeinanderfolgen von Erfassungssignalen durchgeführt wird, um neue Koeffizienten zu berechnen, so daß ein fiktiver Behandlungsvorgang, der durchgeführt werden würde wie der Behandlungsvorgang mit jeder einzelnen dieser Aufeinanderfolgen von Erfaseungssignalen und dieser neuen Koeffizienten anstelle der vorbestimmten Koeffizienten, eine genannte Aufeinanderfolge von Verteilersignalen bildet, deren Signale jeweils gleich sind zu jenen der entsprechenden Aufeinanderfolge der Referenzsignale,

- wobei die neuen Koeffizienten die vorbestimmten Koeffizienten bei denen dieser indirekten Bestimmungsvorgänge bilden, die diesem Kalibrierungsvorgang folgen,

- wobei jeder verwendete Empfindlichkeitsterm während der Kalibrierungsrechnung vom Rang des Erfassungssignals abhängt, der mit dem neuen Koeffizienten während der Berechnung multipliziert werden muß, jedoch unabhängig ist vom Rang der Verteilsignale, die man mit Hilfe dieser neuen Koeffizienten bildet, wobei der Übertragungsterm gleichzeitig vom Rang des Erfassungssignals, das mit dem neuen Koeffizienten während der Berechnung multipliziert werden muß und von jenem der Verteilsignale abhängt, das man mit Hilfe dieses Koeffizienten bildet, wobei dieser Übertragungsterm einen Wert empfängt, der abgespeichert ist und während mehrerer Aufeinanderfolgen der Kalibrierungsvorgänge unverändert bleibt, die somit vereinfacht sind, derart, daß die Gesamtheit der gleichzeitigen Aufstellungsvorgänge der Daten, die in den vereinfachten Kalibrierungsvorgängen enthalten sind, jeweils einen einzigen dieser Aufstellungsvorgänge aufweisen, um eine einzige Aufeinanderfolge von Referenzsignalen und eine einzige Aufeinanderfolge von entsprechenden Erfassungssignalen zu liefern.

3. Verfahren nach Anspruch 2, dadurch gekennzeichnet, daß der Referenzmeßvorgang mit Hilfe eines Referenzmeßsystems (24) ausgeführt wird, das provisorisch oder zeitweilig in das Innere des Kerns (4) eindringt, um dort direkt die inneren Neutronenströme zu messen.

4. Verfahren nach Anspruch 2, dadurch gekennzeichnet, daß die Neutronendetektoren, die außen am Kern angeordnet sind, eine Mehrzahl von Neutronenerfassungssäulen (6) bilden, die winkelmäßig um eine vertikale Achse (3) des Kerns verteilt angeordnet sind und jeweils wenigstens einen oberen Detektor (8) und einen unteren Detektor (10) aufweisen, um eine axiale Verteilung zu bestimmen, die die räumliche Verteilung der lokalen Energien bildet.

5. Verfahren nach Anspruch 4, dadurch gekennzeichnet, daß die Neutronendetektoren ein oberer Detektor (8) und ein unterer Detektor (10) sind, um die Verteilung der lokalen Kernenergien zwischen einem oberen Niveau und einem unteren Niveau des Kerns (4) zu bestimmen.

6. Verfahren nach Anspruch 2, dadurch gekennzeichnet, daß die Übertragungsterme während der Betriebsdauer des Kerns (4) unverändert bleiben.

**Claims**

1. A method of calibrating neutron detectors, there being $n$ detectors disposed outside the core of a nuclear reactor so as to supply detection signals representing the external neutron flux escaping from the core, indirect determination steps being performed using the signals and being repeated at determined time intervals so as to determine a set of $p$ distribution parameters representing the overall distribution of the nuclear power inside the core (4);

the determination steps using a matrix of n.p calibration coefficients, each of which is associated firstly with a detector and with its detection signals, and secondly with a distribution parameter, each distribution parameter being determined by summing the detection signals weighted by the calibration coefficients associated firstly with the respective signals and secondly with the parameter;

the method including calibration steps repeated at determined time intervals that are longer than those of the indirect determination steps, each calibration step including:

firstly measurements of neutron flux inside the core so as to determine the distribution parameters directly; and

then a calculation for updating the calibration coefficients;

said method being characterized by the fact that, for each calibration operation, each of the calibration coefficients associated with a detector is calculated as being the product of a sensitivity term dependent only on the detector and updated during each calibration step, multiplied by a transfer term that remains unchanged over a sequence of a plurality of calibration steps, so that the number of terms to be updated during each step in the sequence is limited to the number $n$ of detectors, and so that the measurements of neutron flux inside the core that are required for the step can be taken without changing the operating configuration of the core.

2. A method of determining the distribution of the nuclear power inside the core of said nuclear reactor, the method implementing the calibration method according to claim 1, internal neutron flux being present inside the core and releasing therein local nuclear power levels dependent on a variable operating configuration of the core, and together constituting said distribution of the nuclear power, the determination method including the following steps:

installing said neutron detectors (8, 10) on the outside of said core of the reactor (4), the detectors forming a succession in which they have ranks such as defined in the description on page 5, line 29, the detectors being placed in fixed positions for receiving said external neutron flux, and for responding by supplying a succession of said corresponding detection signals having the same ranks, the signals representing the neutron flux received by the detectors while also being dependent on the sensitivities of the detectors;

said indirect determination steps for determining the distribution, each of which steps includes a reading step for collecting one of said successions of detection signals, and a processing step for forming a succession of distribution signals having ranks and respectively representing a succession of said distribution parameters, the succession of parameters defining the distribution of the nuclear power inside said core in the configuration presented thereby during the reading step, the processing step forming each of the distribution signals on the basis of the succession of detection signals and by using predetermined weighting coefficients, said processing step including the following steps for that purpose:

multiplying each of the detection signals in said succession by one of said predetermined coefficients, the coefficient depending on the rank of the detection signal, and on the rank of the distribution signal that is formed, the multiplication supplying a weighted detection signal; and

summing all of said weighted detection signals;

each of said calibration steps including:

firstly a set of simultaneous data-reading steps, each of the steps in the set including a reference measurement step including said measurements of neutron flux inside the core so as to supply a succession of reference signals which respectively represent said parameters of said succession of distribution parameters in the configuration that said core presents during the simultaneous data-reading step, and a verification reading step for collecting one of said successions of said detection signals, in the same configuration, a correspondence being established b etween the succession of distribution parameters and the succession of detection signals; and

secondly a calibration calculation performed on the basis of the successions of reference signals and of the successions of detection signals, so as to calculate new coefficients such that a dummy processing step performed like said processing step with each of the succession of detection signals and the new coefficients instead of said predetermined coefficients forms one of said successions of distribution signals in which the signals are respectively equal to those of said corresponding succession of reference signals;

said new coefficients constituting said predetermined coefficients during those of the indirect determination steps which follow the calibration step;

each sensitivity term used during said calibration calculation being dependent on the rank of said detection signal which is to be multiplied by said new coefficient during the calculation, but being independent of the ranks of the distribution signals to be formed by using the new coefficient, said transfer term being dependent both on the rank of said detection signal which is to be multiplied by said new coefficient during the calculation, and also on the ranks of said distribution signals that are to be formed using the coefficient, the transfer term receiving a value that is stored in a memory and that remains unchanged during a plurality of successive calibration steps which are thus simplified, so that each of said sets of simultaneous data-reading steps included in said simplified calibration steps includes a single such reading step so as to supply a single one of said successions of reference signals, and a single one of said successions of corresponding detection signals.

3. A method according to claim 2, characterized by the fact that said reference measurement step is performed by means of a reference measurement system (24) which penetrates temporarily into the core (4) so as to measure said internal neutron flux directly therein.

4. A method according to claim 2, characterized by the fact that said neutron detectors disposed on the outside of the core constitute a plurality of neutron detection columns (6) angularly distributed about a vertical axis (3) of the core, each column including at least one top detector (8) and a bottom detector (10) so as to determine an axial distribution constituting said distribution of the local power levels in space.

5. A method according to claim 4, characterized by the fact that said neutron detectors are a top detector (8) and a bottom detector (10) for determining the distribution of the local nuclear power levels between a top level and a bottom level of the core (4).

6. A method according to claim 2, characterized by the fact that said transfer terms remain unchanged during the period for which the core (4) is in service.

FIG.1

FIG.2